(19) Europäisches Patentamt / European Patent Office / Office européen des brevets

(11) **EP 4 258 585 A1**

(12) **EUROPEAN PATENT APPLICATION**
published in accordance with Art. 153(4) EPC

(43) Date of publication:
**11.10.2023 Bulletin 2023/41**

(21) Application number: **21902532.7**

(22) Date of filing: **06.12.2021**

(51) International Patent Classification (IPC):
*H04L 5/00* (2006.01)

(52) Cooperative Patent Classification (CPC):
**H04L 5/00**

(86) International application number:
**PCT/CN2021/135635**

(87) International publication number:
**WO 2022/121826 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.12.2020 CN 202011435933**

(71) Applicant: **Vivo Mobile Communication Co., Ltd.
Dongguan, Guangdong 523863 (CN)**

(72) Inventors:
• LI, Ping
  Dongguan, Guangdong 523863 (CN)
• HONG, Qi
  Dongguan, Guangdong 523863 (CN)
• LI, Gen
  Dongguan, Guangdong 523863 (CN)

(74) Representative: **Lavoix
Bayerstraße 83
80335 München (DE)**

(54) **RO TIME DOMAIN RESOURCE ALLOCATION METHOD, APPARATUS, AND ELECTRONIC DEVICE**

(57) Disclosed in this application are an RO time-domain resource configuration method and apparatus and an electronic device, belonging to the field of communication technologies. The RO time-domain resource configuration method is performed by a terminal, and includes: determining, based on a first information set and a subcarrier spacing of a reference time unit, RO time-domain resource configuration information that is in each subframe and that is used for transmitting a random access preamble, where parameters of the first information set are obtained in at least one of the following manners: parameters configured by first configuration signaling; obtained by extending the parameters configured by the first configuration signaling; parameters predefined by a protocol; and obtained by extending the parameters predefined by the protocol.

Determine, based on a first information set and a subcarrier spacing of a reference time unit, RO time-domain resource allocation information that is in each subframe and that is used for transmitting a random access preamble ——101

FIG. 3

EP 4 258 585 A1

**Description**

**CROSS-REFERENCE TO RELATED APPLICATIONS**

This application claims the priority of Chinese Patent Application No. 202011435933.5 filed in China on December 7, 2020, the entire content of which is hereby incorporated by reference.

**TECHNICAL FIELD**

This application relates to the field of communications technologies, and in particular to an RO time-domain resource configuration method and apparatus and an electronic device.

**BACKGROUND**

A large physical random access channel (Physical Random Access Channel, PRACH) subcarrier spacing (subcarrier spacing, SCS) is introduced into the related art. According to a current protocol configuration, a subcarrier spacing of a reference slot of a frequency range (FR) 1 is 15 kHz, and a supported PRACH subcarrier spacing is {15, 30} kHz. A subcarrier spacing of a reference slot of an FR 2 is 60 kHz, and a supported PRACH subcarrier spacing is {60, 120} kHz. In a case that an SCS is greater than 120 kHz, even if a 60-kHz subcarrier spacing of a reference slot of the FR 2 is used, the number of PRACH slots within a reference slot exceeds 2. However, in an existing configuration table, the number of PRACH slots within a 60-kHz slot (Number of PRACH slots within 60 kHz slot) can only be 1 or 2, and cannot be used for a larger subcarrier spacing. Therefore, to follow random access occasion (RO) time-domain resource configuration of the FR 2, a reference slot and a parameter set of corresponding RO time-domain configuration need to be redesigned to support a larger PRACH subcarrier spacing.

**SUMMARY**

Embodiments of this application provide an RO time-domain resource configuration method and apparatus and an electronic device, to support a larger PRACH subcarrier spacing.

According to a first aspect, an embodiment of this application provides an RO time-domain resource configuration method, performed by a terminal, and including:

determining, based on a first information set and a subcarrier spacing of a reference time unit, RO time-domain resource configuration information that is in each subframe and that is used for transmitting a random access preamble, where
parameters of the first information set are obtained in at least one of the following manners:

parameters configured by first configuration signaling;
obtained by extending the parameters configured by the first configuration signaling;
parameters predefined by a protocol; and
obtained by extending the parameters predefined by the protocol.

According to a second aspect, an embodiment of this application provides an RO time-domain resource configuration apparatus, including:

a processing module, configured to determine, based on a first information set and a subcarrier spacing of a reference time unit, RO time-domain resource configuration information that is in each subframe and that is used for transmitting a random access preamble, where
parameters of the first information set are obtained in at least one of the following manners:

parameters configured by first configuration signaling;
obtained by extending the parameters configured by the first configuration signaling;
parameters predefined by a protocol; and
obtained by extending the parameters predefined by the protocol.

According to a third aspect, an embodiment of this application further provides an electronic device, including a processor, a memory, and a program or instructions stored in the memory and executable on the processor, where the program or instructions, when being executed by the processor, implement the steps of the foregoing method.

According to a fourth aspect, an embodiment of this application provides a readable storage medium is provided, the readable storage medium storing a program or instructions, where the program or instructions, when being executed by a processor, implement the steps of the foregoing method.

According to a fifth aspect, an embodiment of this application provides a chip. The chip includes a processor and a communication interface. The communication interface is coupled to the processor. The processor is configured to execute a program or instructions, to implement the method in the first aspect.

According to a sixth aspect, a computer program product is provided, where the computer program product is stored in a non-volatile storage medium, where the computer program product is executed by at least one processor to implement the steps of the method in the first aspect.

In embodiments of this application, RO time-domain resource configuration information that is in each subframe and that is used for transmitting a random access preamble is determined based on a first information set and a subcarrier spacing of a reference time unit. In this way, existing RO time-domain resource configuration may be followed, so that a larger PRACH subcarrier spacing is supported.

## BRIEF DESCRIPTION OF THE DRAWINGS

To describe the technical solutions of the embodiments of this application more clearly, the following briefly introduces the accompanying drawings required for describing the embodiments of this application. Apparently, the accompanying drawings in the following description show merely some embodiments of this application, and a person of ordinary skill in the art may still derive other drawings from these accompanying drawings without creative efforts.

FIG. 1 is a schematic diagram of a wireless communication system;
FIG. 2 is a schematic diagram of RO time-domain resource configuration in an FR 2 with a PRACH SCS of 120 kHz;
FIG. 3 is a schematic flowchart of an RO time-domain resource configuration method according to an embodiment of this application;
FIG. 4 is a schematic diagram of RO time-domain resource configuration with a PRACH SCS of 120 kHz and a reference slot reference slot SCS of 120 kHz according to an embodiment of this application;
FIG. 5 is a schematic diagram of RO time-domain resource configuration with a PRACH SCS of 480 kHz and a reference slot reference slot SCS of 120 kHz according to an embodiment of this application;
FIG. 6 is a schematic diagram of RO time-domain resource configuration with a PRACH SCS of 960 kHz and a reference slot reference slot SCS of 120 kHz according to an embodiment of this application;
FIG. 7 is a schematic diagram of RO time-domain resource configuration with a PRACH SCS of 120 kHz and a reference slot reference slot SCS of 60 kHz according to an embodiment of this application;
FIG. 8 is a schematic diagram of RO time-domain resource configuration with a PRACH SCS of 480 kHz and a reference slot reference slot SCS of 480 kHz according to an embodiment of this application;
FIG. 9 is a schematic diagram of RO time-domain resource configuration with a PRACH SCS of 960 kHz and a reference slot reference slot SCS of 480 kHz according to an embodiment of this application;
FIG. 10 is a schematic diagram of a structure of an RO time-domain resource configuration apparatus according to an embodiment of this application; and
FIG. 11 is a schematic diagram of a composition of a terminal according to an embodiment of this application.

## DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

The specification and claims of this application, and terms "first" and "second" are used to distinguish similar objects, but are not used to describe a specific sequence or order. It may be understood that the data used in such a way is interchangeable in proper circumstances, so that the embodiments of this application can be implemented in other sequences than the sequence illustrated or described herein. In addition, "and/or" in the specification and claims indicates at least one of the connected objects, and the character "/", generally indicates an "or" relationship between the associated objects.

The technology described herein is not limited to a Long Term Evolution (Long Term Evolution, LTE)/LTE-Advanced (LTE-Advanced, LTE-A) system, and may be used in various wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), and Single-carrier Frequency-Division Multiple Access (Single-carrier Frequency-Division Multiple Access, SC-FDMA), and another system. The terms "system" and "network" are often used interchangeably. The CDMA system may implement radio technologies such as CDMA2000 and Universal Terrestrial Radio Access (Universal Terrestrial Radio Access, UTRA). The UTRA includes a wideband CDMA (Wideband Code Division Multiple Access, WCDMA) and other CDMA variants. The TDMA system may implement radio technologies such as Global System for Mobile Communications (Global System for Mobile Communications, GSM). The OFDMA system may implement radio technologies such as UltraMobile Broadband (UltraMobile Broadband, UMB), Evolved-UTRA (Evolved-UTRA, E-UTRA), IEEE 802.11 (Wi-Fi), IEEE 802.16 (WiMAX), IEEE 802.20, and Flash-OFDM. UTRA and E-UTRA are parts of Universal Mobile Telecommunications System (Universal Mobile Telecommunications System, UMTS). LTE and more advanced LTE (for example, LTE-A) use new UMTS releases of E-UTRA. UTRA, E-UTRA, UMTS, LTE, LTE-A, and GSM are described in the documents from the organization named "Third Generation Partnership Project" (3rd Generation Partnership Project, 3GPP). CDMA2000 and UMB are described in the documents from the organization named "Third Generation Partnership Project 2 "(3GPP2). The technology described herein may be used for both the systems and radio technologies mentioned above as well as for other systems and radio technologies. The following descriptions describe NR systems for exemplary purposes and use the term NR for most of the following descriptions. However, these technologies may also be applied to applications other than NR system applications.

Examples are provided in the following description, but are not used to limit the scope, applicability or configuration described in the claims. Changes may be made to the functions and arrangement of the described elements without departing from the spirit and scope of the present disclosure. Various procedures or components may be appropriately omitted, replaced, or added in various examples. For example, the described methods may be performed in a different order than described, and various steps may be added, omitted, or combined. In addition, features described with reference to some examples may be combined in other examples.

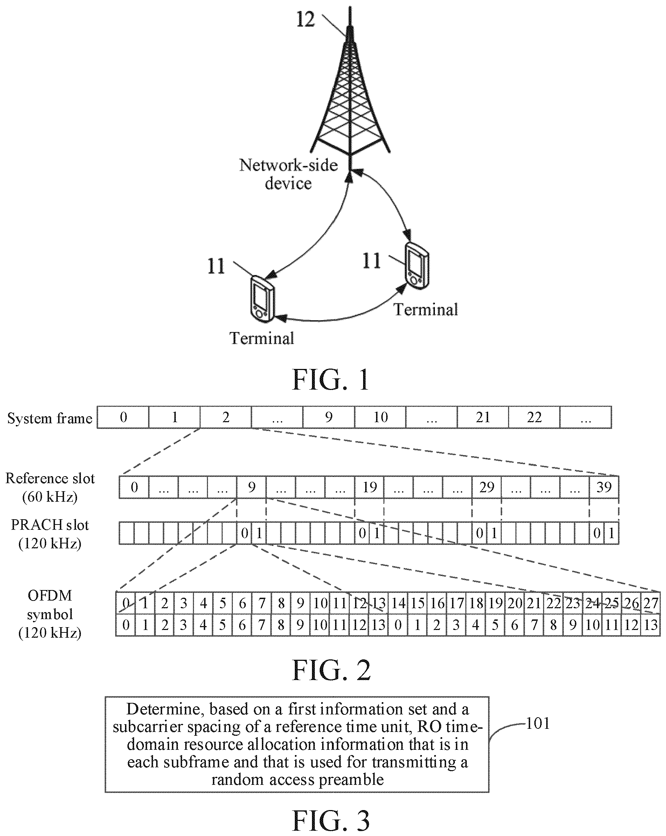

FIG. 1 is a schematic diagram of a wireless communication system to which an embodiment of this application is applicable. The wireless communication system includes a terminal 11 and a network-side device 12. The terminal 11 may also be referred to as a terminal device or user terminal (User Equipment, UE). The terminal 11 may be a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device) or an in-vehicle device, among other terminal side devices. It should be noted that the specific type of the terminal 11 is not limited in embodiments of this application. The network-side device 12 may be a base station or a core network. The foregoing base station may be a base station of 5G and later releases (for example, a gNB, a 5G NR NB), or a base station (for example, an eNB, a WLAN access point, or another access point) in other communication systems, or a location server (for example, an evolved serving mobile location center (Evolved Serving Mobile Location Center, E-SMLC) or a location manager function (Location Manager Function, LMF)). The base station may be referred to as a nodeB, an evolved nodeB, an access point, a base transceiver station (Base Transceiver Station, BTS), a radio base station, a radio transceiver, a basic service set (Basic Service Set, BSS), an extended service set (Extended Service Set, ESS), a nodeB, an evolved nodeB (eNB), a home nodeB, a home evolved nodeB, a WLAN access point, a Wi-Fi node, or some other appropriate term in the field, provided that the same technical effect is achieved. The base station is not limited to a specific technical vocabulary. It needs to be noted that a base station in an NR system is only used as an example in embodiments of this application. However, the specific type of the base station and the specific communication system are not limited in embodiments of this application.

In an existing communication system, a physical random access channel (Physical Random Access Channel, PRACH) is used for transmitting a random access preamble (preamble). Only one preamble can be transmitted at each random access occasion (PRACH occasion, RO). However, a plurality of UEs may use a same RO to transmit different preambles.

A starting position of the PRACH in frequency domain is specified by msg1-FrequencyStart or msgA-RO-FrequencyStart. In initial access duration, this field indicates a frequency offset (in resource blocks (Resource Block, RB)) between the lowest PRACH resource in frequency domain and a physical resource block (physical resource block, PRB) 0 of an initial uplink bandwidth part (Bandwidth Part, BWP). In another case, this field indicates a frequency offset (in RBs) between the lowest PRACH resource in frequency domain and a PRB 0 of a corresponding activated uplink BWP. msg1-FDM or msgA-RO-FDM indicates the number of PRACH resources (having the same position in time domain) included in frequency domain. Each PRACH resource in frequency domain is indicated by an index $n_{RA} \in$ {0,1,...,M - 1}. M is equal to the value of msg1-FDM or msgA-RO-FDM. In initial access duration, the index is numbered in ascending order of frequency in the initial uplink BWP starting from the lowest frequency. In another case, the index is numbered in ascending order of frequency in the activated uplink BWP starting from the lowest frequency.

Preambles of one cell are transmitted on a group of PRACH slots (slot). One PRACH slot may include a plurality of random access occasions (PRACH occasion, RO) in time domain. Each RO is used for transmitting a preamble in a specific format. A time-domain resource that can be transmitted by a random access preamble (Random access preamble) is determined by a prach-Configuration field. UE uses prach-ConfigurationIndex to search Table 1 (an FR 1 and using a paired spectrum/supplementary uplink (supplementary uplink, SUL)), Table 2 (an FR 1 and using an unpaired spectrum), or Table 3 (an FR 2 and using an unpaired spectrum) of a corresponding configuration to obtain a used preamble format and an available PRACH time-domain resource of a corresponding cell.

Table 1: Random access configurations for a frequency range 1 (FR 1) and a paired spectrum/supplementary uplink (Random access configurations for an FR 1 and a paired spectrum/supplementary uplink)

| PRACH configuration index (Configuration Index) | Random access preamble format (Preamble format) | $n_{\mathrm{SFN}}$ mod $x = y$ | | Subframe number (Subframe number) | Starting symbol (Starting symbol) | Number of PRACH slots within a subframe (Number of PRACH slots within a subframe) | $N_{\mathrm{t}}^{\mathrm{RA,slot}}$, number of time-domain PRACH occasions within a PRACH slot (number of time-domain PRACH occasions within a PRACH slot) | $N_{\mathrm{dur}}^{\mathrm{RA}}$, PRACH duration (duration) |
|---|---|---|---|---|---|---|---|---|
| | | $x$ | $y$ | | | | | |
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| ... | ... | ... | ... | ... | ... | ... | ... | ... |

Table 2: Random access configurations for an FR 1 and an unpaired spectrum (Random access configurations for an FR 1 and an unpaired spectrum)

| PRACH Configuration Index | Preamble format | $n_{\mathrm{SFN}}$ mod $x = y$ | | Subframe number | Starting symbol | Number of PRACH slots within a subframe | $N_{\mathrm{t}}^{\mathrm{RA,slot}}$, number of time-domain PRACH occasions within a PRACH slot | $N_{\mathrm{dur}}^{\mathrm{RA}}$, PRACH duration |
|---|---|---|---|---|---|---|---|---|
| | | $x$ | $y$ | | | | | |
| 0 | 0 | 16 | 1 | 9 | 0 | - | - | 0 |
| 1 | 0 | 8 | 1 | 9 | 0 | - | - | 0 |
| 2 | 0 | 4 | 1 | 9 | 0 | - | - | 0 |
| 3 | 0 | 2 | 0 | 9 | 0 | - | - | 0 |
| 4 | 0 | 2 | 1 | 9 | 0 | - | - | 0 |
| ... | ... | ... | ... | ... | ... | ... | ... | ... |

Table 3: Random access configurations for an FR 2 and an unpaired spectrum (Random access configurations for an FR 2 and an unpaired spectrum)

| PRACH Config. Index | Preamble format | $n_{SFN}$ mod $x = y$ | | Slot number (slot number) | Starting symbol | Number of PRACH slots within a 60-kHz slot | $N_t^{RA,slot}$, number of time-domain PRACH occasions within a PRACH slot | $N_{dur}^{RA}$, PRACH duration |
|---|---|---|---|---|---|---|---|---|
| | | $x$ | $y$ | | | | | |
| 0 | A1 | 16 | 1 | 4, 9, 14, 19, 24, 29, 34, 39 | 0 | 2 | 6 | 2 |
| 1 | A1 | 16 | 1 | 3, 7, 11, 15, 19, 23, 27, 31, 35, 39 | 0 | 1 | 6 | 2 |
| 2 | A1 | 8 | 1, 2 | 9, 19, 29, 39 | 0 | 2 | 6 | 2 |
| 3 | A1 | 8 | 1 | 4, 9, 14, 19, 24, 29, 34, 39 | 0 | 2 | 6 | 2 |
| 4 | A1 | 8 | 1 | 3, 7, 11, 15, 19, 23, 27, 31, 35, 39 | 0 | 1 | 6 | 2 |
| ... | ... | ... | ... | ... | ... | ... | ... | ... |

For the FR 1, a slot in the FR 1 uses a 15-kHz subcarrier spacing as a reference. For the FR 2, a slot in the FR 2 uses a 60-kHz subcarrier spacing as a reference.

Specific meanings of the parameters in the foregoing three tables are as follows:

PRACH Configuration Index refers to an index value of RO configuration, and is configured by radio resource control (Radio Resource Control, RRC) signaling.

Preamble format refers to a used Preamble format.

$n_{SFN}$ mod x = y refers to a radio frame position of an RO. For example, $n_{SFN}$ mod 1 = 0 represents that a preamble may be transmitted in each radio frame.

Subframe/Slot number refers to a sequence number of a subframe or a slot in which an RO is located within a radio frame of which transmission is allowed.

Starting symbol refers to a sequence number of a starting symbol of a first RO in time domain in each subframe/60-kHz slot including ROs.

Number of PRACH slots within a subframe/60-kHz slot refers to the number of PRACH slots within a subframe/60-kHz slot. $N_t^{RA,slot}$ refers to the number of ROs within a PRACH slot, that is, the number of time domain transmission opportunities of a preamble. $N_{dur}^{RA}$ refers to the number of OFDM symbols occupied by an RO.

It may be calculated, based on the foregoing parameter set, that a position of a starting OFDM symbol of each RO within a PRACH slot within a reference slot is:

$$l = l_0 + n_t^{RA} N_{dur}^{RA} + 14 n_{slot}^{RA},$$

where

$l_0$ is a starting symbol;

$n_t^{RA}$ is an $n_t^{RAth}$ PRACH occasion within a PRACH slot, and has a sequence number being 0 to $N_t^{RA,slot} - 1$ sequentially;

Nd is the number of OFDM symbols occupied by a PRACH occasion in time domain; and

in a case that $\Delta f_{RA} \in \{1.25, 5, 15, 60\}$ kHz, a slot sequence number of a PRACH slot within a reference slot is $n_{slot}^{RA} = 0$; in a case that $\Delta f_{RA} \in \{30, 120\}$ kHz and the number of PRACH slots within a subframe is equal to 1 or the number of PRACH slots within 60-kHz slot is equal to 1, a slot sequence number of a PRACH slot within a reference slot is $n_{slot}^{RA} = 1$; or in other cases a slot sequence number of a PRACH slot within a reference slot is $n_{slot}^{RA} \in \{0, 1\}$.

For example, it is assumed that an FR 2 and an unpaired spectrum/SUL are used and a subcarrier spacing of a preamble is 120 kHz. In a case that an indicated PRACH Configuration Index is equal to 74, it is obtained through table lookup that in this configuration, UE can transmit a preamble in a format A3 in only slots {9, 19, 29, 39} of system frames that satisfy $n_{SFN}\%1 = 0$ (that is, all system frames) (for the FR 2, slots are numbered with a subcarrier spacing of 60 kHz as a reference). One slot includes two consecutive PRACH slots (the value of a corresponding Number of PRACH slots within a 60-kHz slot is 2). One PRACH slot includes $N_t^{RA,slot} = 1$ ROs in time domain. Each RO occupies $N_{dur}^{RA} = 6$ OFDM symbols, and a PRACH is transmitted starting from an eighth OFDM symbol (the value of a corresponding Starting symbol is 7) of each PRACH slot.

Table 4: Random access configurations for an FR 2 and an unpaired spectrum

| PRACH Config. Index | Preamble format | $n_{SFN} \bmod x = y$ | | Subframe number | Starting symbol | Number of PRACH slots within a 60-kHz slot | $N_t^{RA,slot}$, number of time-domain PRACH occasions within a PRACH slot | $N_{dur}^{RA}$, PRACH duration |
| | | $x$ | $y$ | | | | | |
|---|---|---|---|---|---|---|---|---|
| 74 | A3 | 1 | 0 | 9, 19, 29, 39 | 7 | 2 | 1 | 6 |

Because $\Delta f_{RA} = 120$ kHz and the number of PRACH slots within 60-kHz slot is equal to 2, a slot sequence number of a PRACH slot within a reference slot is $n_{slot}^{RA} \in \{0, 1\}$.

It may be calculated, based on the foregoing parameter set, that a position of a starting OFDM symbol of each RO within a PRACH slot within a reference slot is:

$$l = l_0 + n_t^{RA}N_{dur}^{RA} + 14n_{slot}^{RA} = 7 + 0 \times 6 + 14 \times \{0,1\} = \{7, 21\}.$$

A large PRACH subcarrier spacing (subcarrier spacing, SCS) is introduced into the related art. According to a current protocol configuration, a subcarrier spacing of a reference slot of an FR 1 is 15 kHz, and a supported PRACH subcarrier spacing is {15, 30} kHz. A subcarrier spacing of a reference slot of an FR 2 is 60 kHz, and a supported PRACH subcarrier spacing is {60, 120} kHz. In a case that an SCS is greater than 120 kHz, even if a 60-kHz subcarrier spacing of a reference slot of the FR 2 is used, the number of PRACH slots within a reference slot exceeds 2. However, in an existing configuration table, the number of PRACH slots within a 60-kHz slot can only be 1 or 2, and cannot be used for a larger subcarrier spacing. Therefore, to follow RO time-domain resource configuration of the FR 2, a reference slot and a parameter set of corresponding RO time-domain configuration need to be redesigned to support a larger PRACH subcarrier spacing.

An embodiment of this application provides a random access occasion RO time-domain resource configuration method, performed by a terminal. As shown FIG. 3, the method includes the following steps.

Step 101: Determine, based on a first information set and a subcarrier spacing of a reference time unit, RO time-domain resource configuration information that is in each subframe and that is used for transmitting a random access preamble.

Parameters of the first information set are obtained in at least one of the following manners:

parameters configured by first configuration signaling;
obtained by extending the parameters configured by the first configuration signaling;
parameters predefined by a protocol; and

obtained by extending the parameters predefined by the protocol.

The first configuration signaling may be radio resource control (Radio Resource Control, RRC) signaling.

In embodiments of this application, RO time-domain resource configuration information that is in each subframe and that is used for transmitting a random access preamble is determined based on a first information set and a subcarrier spacing of a reference time unit. In this way, existing RO time-domain resource configuration may be followed, so that a larger PRACH subcarrier spacing is supported.

In some embodiments, the subcarrier spacing of the reference time unit is only applied or configured in a specific frequency range and/or a specific PRACH subcarrier spacing. The specific frequency range may be 52.6 GHz to 71 GHz.

In some embodiments, subcarrier spacings of all PRACH time units correspond to a same subcarrier spacing of a reference time unit; or

a subcarrier spacing of at least one PRACH time unit corresponds to a unique subcarrier spacing of a reference time unit; or

a subcarrier spacing of at least one PRACH time unit corresponds to a first subcarrier spacing of a reference time unit, and the first subcarrier spacing of the reference time unit is any one of subcarrier spacings of a plurality of subcarrier spacings of the reference time units. For example, the subcarrier spacing of the reference time unit includes a subcarrier spacing A of a reference time unit, a subcarrier spacing B of a reference time unit, and a subcarrier spacing C of a reference time unit. A subcarrier spacing of at least one PRACH time unit corresponds to the subcarrier spacing A of the reference time unit, a subcarrier spacing of at least one PRACH time unit corresponds to the subcarrier spacing B of a reference time unit, and a subcarrier spacing of at least one PRACH time unit corresponds to the subcarrier spacing C of a reference time unit.

In some embodiments, the first information set includes at least one of the following:

a time unit number of an RO based on a reference time unit;
a time unit number of a PRACH within a reference time unit; and
RO configuration information of a preset frequency range.

The preset frequency range may be a frequency range 2 or may be another frequency range, for example, a frequency range 1.

In some embodiments, the RO configuration information of the preset frequency range includes at least one of the following:

a number of ROs within a PRACH time unit;
a starting symbol of a first RO in time domain within each basic time unit including ROs; and
a number of OFDM symbols occupied by an RO in time domain.

In some embodiments, the RO configuration information of the preset frequency range is predefined by a protocol or configured by signaling.

In some embodiments, the time unit number of the RO based on a reference time unit is determined by at least one of a time unit number of the RO based on a basic time unit, a number s of basic time units within a frame, and a subcarrier spacing $15 \times 2^{\mu_2}$ of a basic time unit, a value of s is predefined by a protocol or configured by signaling, and a value of $\mu_2$ is predefined by a protocol or configured by signaling. For example, the value of s is predefined by a protocol, and the value of $\mu_2$ is predefined by a protocol; or, the value of s is predefined by a protocol, and the value of $\mu_2$ is configured by signaling; or, the value of s is configured by signaling, and the value of $\mu_2$ is predefined by a protocol; or, the value of s is configured by signaling, and the value of $\mu_2$ is configured by signaling.

In some embodiments, the subcarrier spacing of the reference time unit is $15 \times 2^{\mu_1}$, the time unit number of the RO based on a reference time unit is obtained by performing periodic extension on a time unit number of the RO based on a basic time unit, a period is s, and a number of times of the periodic extension is $2^{\mu_1-\mu_2}$.

In a specific example, a sequence number of a slot in which an RO based on a basic slot is located is $\{0,1,...,k\}$ (sequence numbers are not necessarily consecutive, are not necessarily sequential, and do not necessarily start from 0). The number of basic slots within a frame is s. A subcarrier spacing of a basic slot is $15 \times 2^{\mu_2}$. A rule of the sequence number of a slot in which an RO based on a basic slot is located may be followed to number a slot in which an RO based on a reference slot is located in an extended manner, to obtain that a sequence number of the slot in which an RO based on a reference slot is located is $\{0,1, ..., k\} + s \times \{0,1,..., 2^{\mu_1-\mu_2} - 1\}$ ($\mu_1 \geq \mu_2$).

In some embodiments, in a case that a PRACH subcarrier spacing $15 \times 2^{\mu}$ is equal to a subcarrier spacing

$15 \times 2^{\mu_1}$ of a reference time unit, the time unit number of a PRACH within a reference time unit is $n_{slot}^{RA} = \{0\}$; or otherwise the time unit number $n_{slot}^{RA}$ of a PRACH within a reference time unit is determined by at least one of a time unit number of a PRACH within a basic time unit, a maximum number M of PRACH time units within a basic time unit, $\mu$, and $\mu_1$, a value of M is predefined by a protocol or configured by signaling, and a value of $\mu$ is predefined by a protocol or configured by signaling.

In some embodiments, the time unit number $n_{slot}^{RA}$ of a PRACH within a reference time unit is obtained by performing periodic extension on the time unit number of a PRACH within a basic time unit, a period is M, and a number of times of the periodic extension is $M^{\mu-\mu_1-1}$.

In a specific example, a sequence number of a slot of a PRACH within a basic slot is {0,1,...,Q} (sequence numbers are not necessarily consecutive, are not necessarily sequential, and do not necessarily start from 0). The maximum number of PRACH slots that may be within a basic slot is M. A rule of the sequence number of a slot of a PRACH within a basic slot may be followed to number PRACH slots within a reference slot in an extended manner, to obtain a sequence number $n_{slot}^{RA}$ of a slot of a PRACH within a reference slot. If a used PRACH subcarrier spacing 15 $\times$ $2^{\mu}$ is equal to a subcarrier spacing of a reference slot, $n_{slot}^{RA} = \{0\}$; or otherwise,

$$n_{slot}^{RA} = \{0,1,\dots,Q\} + M \times \{0,1,\dots,M^{\mu-\mu_1-1} - 1\}.$$

In some embodiments, in a case that a subcarrier spacing of at least one PRACH time unit corresponds to a unique subcarrier spacing of a reference time unit, the subcarrier spacing of the reference time unit is used for RO time-domain resource configuration of a first part. The first part is a part with a PRACH subcarrier spacing greater than a first subcarrier spacing. The first subcarrier spacing is a maximum supported PRACH subcarrier spacing of a subcarrier spacing of a basic time unit.

In some embodiments, in a case that a subcarrier spacing of at least one PRACH time unit corresponds to a first subcarrier spacing of a reference time unit, the first subcarrier spacing of the reference time unit is used for RO time-domain resource configuration of the subcarrier spacing of the at least one PRACH time unit.

In some embodiments, the time unit is a slot. For example, one time unit is one slot or a plurality of slots. The time unit may be an RO configuration period. For example, one time unit is one RO configuration period or a plurality of RO configuration periods.

In some embodiments, the subcarrier spacing of the reference time unit is configured by signaling or predefined by a protocol.

In a specific embodiment, for example, the time unit is a slot. It is assumed that the design of the FR 2 is followed. As shown in Table 5, in a case that the indicated PRACH Configuration Index is equal to 74, in this configuration, UE can transmit a preamble in a format A3 in only system frames that satisfy $n_{SFN}\%1 = 0$ (that is, all system frames).

In addition, a PRACH subcarrier spacing supported by the FR 2 is {60 kHz, 120 kHz}. It is assumed that a PRACH subcarrier spacing used in the FR 2 is 120 kHz.

Table 5: Random access configurations for an FR 2 and an unpaired spectrum

| PRACH Config. Index | Preamble format | $n_{SFN}$ mod x = y | | Subframe number | Starting symbol | Number of PRACH slots within a 60-kHz slot | $N_t^{RA,slot}$, number of time-domain PRACH occasions within a PRACH slot | $N_{dur}^{RA}$, PRACH duration |
|---|---|---|---|---|---|---|---|---|
| | | x | y | | | | | |
| 74 | A3 | 1 | 0 | 9, 19, 29, 39 | 7 | 2 | 1 | 6 |

It is assumed that a combination of PRACH subcarrier spacings in B52.6 GHz is 120 kHz+480 kHz+960 kHz.

For all SCSs, it is defined that the subcarrier spacing of the reference slot is $15 \times 2^{\mu_1} = 120$ kHz.

In this embodiment, the first information set includes:

1. A sequence number of a slot in which an RO based on a reference slot is located:

The sequence number {9, 19, 29, 39} of a slot in which an RO based on a basic slot is located in the FR 2 is followed. Slots that are based on a reference slot and that can be used for transmitting the preamble are numbered in an extended manner to obtain the sequence number of the slot in which an RO based on a reference slot is located:

$$\{9,19,29,39\} + 40 \times \{0,1,\ldots,2^{\mu_1-\mu_2} - 1\}.$$

For example, a sequence number of a slot in which an RO based on a reference slot is located is: {9, 19, 29, 39, 49, 59, 69, 79}, that is, $\{9,19,29,39\} + 40 \times \{0,1,\ldots, 2^{3-2} - 1\}$.

2. A sequence number of a slot of a PRACH within a reference slot:

A sequence number of a slot of a PRACH within a basic slot is {0,1}. The maximum number of PRACH slots that may be within a basic slot is 2. A rule of the sequence number of a slot of a PRACH within a basic slot of the FR 2 may be followed to number PRACH slots within a reference slot in an extended manner, to obtain a sequence number of a slot of a PRACH within a reference slot:

If the PRACH subcarrier spacing is 120 kHz,

$$n_{slot}^{RA} = \{0\}.$$

If the PRACH subcarrier spacing is 480 kHz,

$$n_{slot}^{RA} = \{0,1\} + 2 \times \{0,1,\ldots, 2^{5-3-1} - 1\} = \{0,1,2,3\}.$$

If the PRACH subcarrier spacing is 960 kHz,

$$n_{slot}^{RA} = \{0,1\} + 2 \times \{0,1,\ldots, 2^{6-3-1} - 1\} = \{0,1,2,3,4,5,6,7\}.$$

3. The number of ROs within a PRACH slot in the first information set is 1.

4. A starting symbol of a first RO in time domain within each basic slot including ROs in the first information set is 7.

5. The value of an OFDM symbol occupied by an RO in time domain in the first information set is 6.

A formula of calculating a position of a starting OFDM symbol of each RO within a PRACH slot within a reference slot is:

$$l = l_0 + n_t^{RA} N_{dur}^{RA} + 14 n_{slot}^{RA}.$$

If the PRACH subcarrier spacing is 120 kHz,

$$l = l_0 + n_t^{RA} N_{dur}^{RA} + 14 n_{slot}^{RA} = 7 + 0 \times 6 + 14 \times \{0\} = \{7\}.$$

If the PRACH subcarrier spacing is 480 kHz,

$$l = l_0 + n_t^{RA} N_{dur}^{RA} + 14 n_{slot}^{RA} = 7 + 0 \times 6 + 14 \times \{0,1,2,3\} = \{7,21,35,49\}.$$

If the PRACH subcarrier spacing is 960 kHz,

$$l = l_0 + n_t^{RA} N_{dur}^{RA} + 14 n_{slot}^{RA} = 7 + 0 \times 6 + 14 \times \{0,1,2,3,4,5,6,7\} =$$
$$\{7,21,35,49,\ldots,105\}.$$

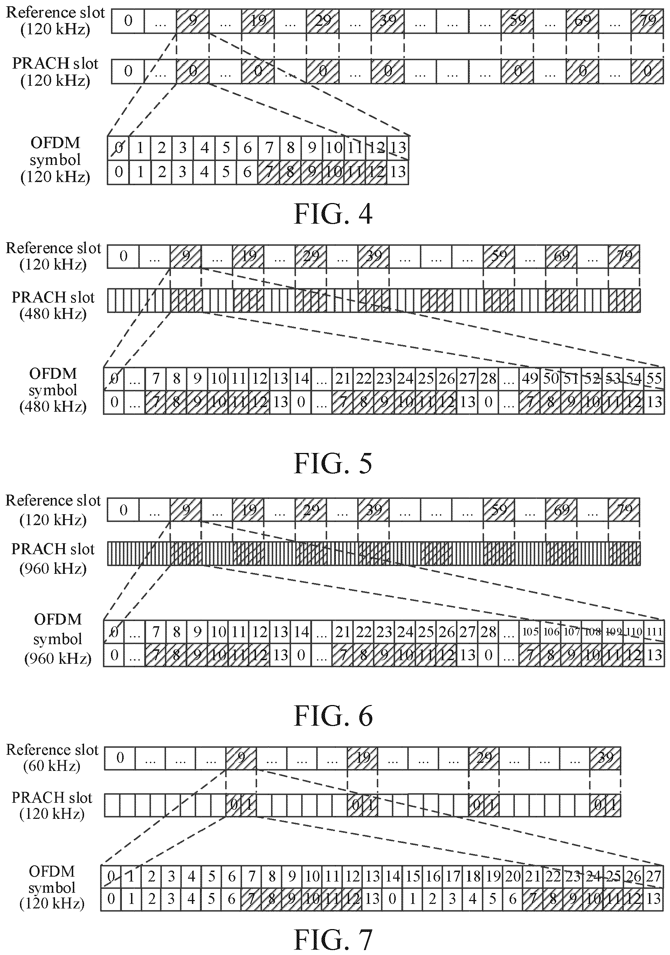

Through the foregoing calculation, RO time-domain resource configuration for transmitting a preamble in each subframe may be obtained based on first information, as shown in FIG. 4 to FIG. 6.

In another specific embodiment, the design of the FR 2 in the foregoing embodiment is still used.

It is assumed that a combination of PRACH subcarrier spacings in B52.6 GHz is 120 kHz+480 kHz+960 kHz.

Subcarrier spacings supported by the FR 2 are {60 kHz, 120 kHz}. Therefore, in B52.6 GHz, RO configuration of PRACH SCS 120 kHz may follow the configuration of the FR 2. For PRACH SCS 480 kHz and 960 kHz, it may be defined that a subcarrier spacing of a reference slot is $15 \times 2^{\mu 1} = 480$ kHz.

In this embodiment, the first information set includes:

1. A sequence number of a slot in which an RO based on a reference slot is located:

The sequence number {9, 19, 29, 39} of a slot in which an RO based on a basic slot is located in the FR 2 is followed. Slots that are based on a reference slot and that can be used for transmitting the preamble are numbered in an extended manner to obtain the sequence number of the slot in which an RO based on a reference slot is located:

$$\{9,19,29,39\} + 40 \times \{0,1,\ldots,2^{\mu_1-\mu_2} - 1\}.$$

For example, sequence numbers of slots that can be used for transmitting a preamble are: {9, 19, 29, 39,..., 309, 319}, that is,

$$\{9,19,29,39\} + 40 \times \{0,1,\ldots,2^{5-2} - 1\}.$$

2. A sequence number of a slot of a PRACH within a reference slot:

A sequence number of a slot of a PRACH within a basic slot is {0,1}. The maximum number of PRACH slots that may be within a basic slot is 2. A rule of the sequence number of a slot of a PRACH within a basic slot of the FR 2 may be followed to number PRACH slots within a reference slot in an extended manner, to obtain a sequence number of a slot of a PRACH within a reference slot:

$$n_{slot}^{RA} = \{0,1\} + 2 \times \{0,1,\ldots,2^{\mu-\mu_1-1} - 1\} = \{0,1\}.$$

If the PRACH subcarrier spacing is 480 kHz,

$$n_{slot}^{RA} = \{0\}.$$

If the PRACH subcarrier spacing is 960 kHz,

$$n_{slot}^{RA} = \{0,1\} + 2 \times \{0,1,\ldots,2^{6-5-1} - 1\} = \{0,1\}.$$

3. The number of ROs within a PRACH slot in the first information set is 1.
4. A starting symbol of a first RO in time domain within each basic slot including ROs in the first information set is 7.
5. The value of an OFDM symbol occupied by an RO in time domain in the first information set is 6.

A formula of calculating a position of a starting OFDM symbol of each RO within a PRACH slot within a reference slot is:

$$l = l_0 + n_t^{RA} N_{dur}^{RA} + 14 n_{slot}^{RA}.$$

If the PRACH subcarrier spacing is 480 kHz,

$$l = l_0 + n_t^{RA} N_{dur}^{RA} + 14 n_{slot}^{RA} = 7 + 0 \times 6 + 14 \times \{0\} = \{7\}.$$

If the PRACH subcarrier spacing is 960 kHz,

$$l = l_0 + n_t^{RA} N_{dur}^{RA} + 14 n_{slot}^{RA} = 7 + 0 \times 6 + 14 \times \{0,1\} = \{7,21\}.$$

If the PRACH subcarrier spacing is 120 kHz, the RO configuration of the FR 2 is followed.

Through the foregoing calculation, RO time-domain resource configuration for transmitting a preamble in each subframe may be obtained based on first information, as shown in FIG. 7 to FIG. 9.

It should be noted that the RO time-domain resource configuration method provided in embodiments of this application may be performed by an RO time-domain resource configuration apparatus or modules in the RO time-domain resource configuration apparatus that are configured to perform and load the RO time-domain resource configuration method. In embodiments of this application, an example in which the RO time-domain resource configuration apparatus performs and loads the RO time-domain resource configuration method is used to describe the RO time-domain resource configuration method provided in embodiments of this application.

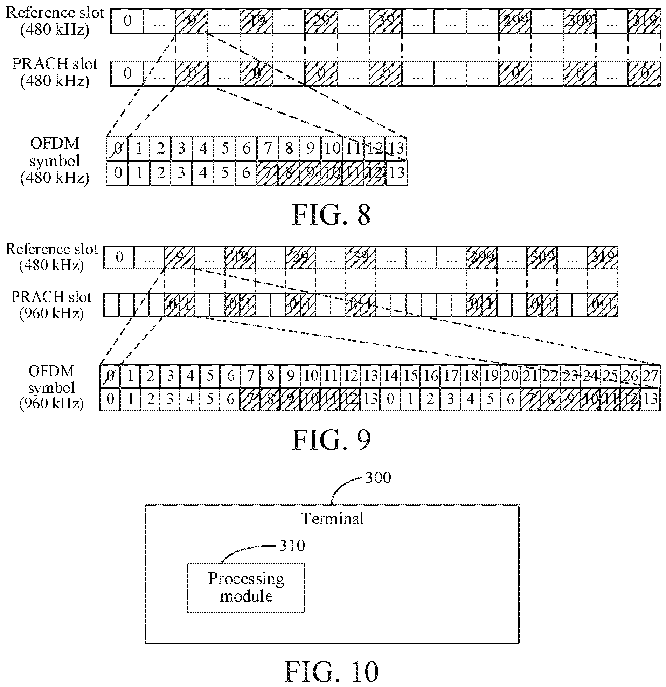

An embodiment of this application provides an RO time-domain resource configuration apparatus, applied to a terminal 300. As shown FIG. 10, the apparatus includes:

a processing module 310, configured to determine, based on a first information set and a subcarrier spacing of a reference time unit, RO time-domain resource configuration information that is in each subframe and that is used for transmitting a random access preamble.

Parameters of the first information set are obtained in at least one of the following manners:

parameters configured by first configuration signaling;
obtained by extending the parameters configured by the first configuration signaling;
parameters predefined by a protocol; and
obtained by extending the parameters predefined by the protocol.

The first configuration signaling may be RRC signaling.

In embodiments of this application, RO time-domain resource configuration information that is in each subframe and that is used for transmitting a random access preamble is determined based on a first information set and a subcarrier spacing of a reference time unit. In this way, existing RO time-domain resource configuration may be followed, so that a larger PRACH subcarrier spacing is supported.

In some embodiments, the subcarrier spacing of the reference time unit is only applied or configured in a specific frequency range and/or a specific PRACH subcarrier spacing. The specific frequency range may be 52.6 GHz to 71 GHz.

In some embodiments, subcarrier spacings of all PRACH time units correspond to a same subcarrier spacing of a reference time unit; or

a subcarrier spacing of at least one PRACH time unit corresponds to a unique subcarrier spacing of a reference time unit; or
a subcarrier spacing of at least one PRACH time unit corresponds to a first subcarrier spacing of a reference time unit, and the first subcarrier spacing of the reference time unit is any one of subcarrier spacings of a plurality of subcarrier spacings of the reference time units.

In some embodiments, the first information set includes at least one of the following:

a time unit number of an RO based on a reference time unit;
a time unit number of a PRACH within a reference time unit; and
RO configuration information of a preset frequency range.

In some embodiments, the RO configuration information of the preset frequency range includes at least one of the following:

a number of ROs within a PRACH time unit;
a starting symbol of a first RO in time domain within each basic time unit including ROs; and
a number of OFDM symbols occupied by an RO in time domain.

In some embodiments, the RO configuration information of the preset frequency range is predefined by a protocol or configured by signaling.

In some embodiments, the time unit number of the RO based on a reference time unit is determined by at least one of a time unit number of the RO based on a basic time unit, a number s of basic time units within a frame, and a subcarrier spacing $15 \times 2^{\mu 2}$ of a basic time unit, a value of s is predefined by a protocol or configured by signaling, and

a value of $\mu_2$ is predefined by a protocol or configured by signaling.

In some embodiments, the subcarrier spacing of the reference time unit is $15 \times 2^{\mu_1}$, the time unit number of the RO based on a reference time unit is obtained by performing periodic extension on a time unit number of the RO based on a basic time unit, a period is s, and a number of times of the periodic extension is $2^{\mu_1-\mu_2}$.

In some embodiments, in a case that a PRACH subcarrier spacing $15 \times 2^\mu$ is equal to a subcarrier spacing $15 \times 2^{\mu_1}$ of a reference time unit, the time unit number of a PRACH within a reference time unit is $n_{slot}^{RA} = \{0\}$; or otherwise the time unit number $n_{slot}^{RA}$ of a PRACH within a reference time unit is determined by at least one of a time unit number of a PRACH within a basic time unit, a maximum number M of PRACH time units within a basic time unit, $\mu$, and $\mu_1$, a value of M is predefined by a protocol or configured by signaling, and a value of $\mu$ is predefined by a protocol or configured by signaling.

In some embodiments, the time unit number $n_{slot}^{RA}$ of a PRACH within a reference time unit is obtained by performing periodic extension on the time unit number of a PRACH within a basic time unit, a period is M, and a number of times of the periodic extension is $M^{\mu-\mu_1-1}$.

In some embodiments, in a case that a subcarrier spacing of at least one PRACH time unit corresponds to a unique subcarrier spacing of a reference time unit, the subcarrier spacing of the reference time unit is used for RO time-domain resource configuration of a first part. The first part is a part with a PRACH subcarrier spacing greater than a first subcarrier spacing. The first subcarrier spacing is a maximum supported PRACH subcarrier spacing of a subcarrier spacing of a basic time unit.

In some embodiments, in a case that a subcarrier spacing of at least one PRACH time unit corresponds to a first subcarrier spacing of a reference time unit, the first subcarrier spacing of the reference time unit is used for RO time-domain resource configuration of the subcarrier spacing of the at least one PRACH time unit.

In some embodiments, the time unit is a slot.

In some embodiments, the subcarrier spacing of the reference time unit is configured by signaling or predefined by a protocol.

The RO time-domain resource configuration apparatus in embodiments of this application may be an apparatus or may be a part, an integrated circuit or a chip in a terminal. The apparatus may be a mobile electronic device or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a network attached storage (Network Attached Storage, NAS), a personal computer (personal computer, PC), a television (television, TV), a teller machine, a kiosk, or the like. This is not specifically limited in embodiments of this application.

The RO time-domain resource configuration apparatus in embodiments of this application may be an apparatus with an operating system. The operating system may be an Android (Android) operating system, may be an iOS operating system, or may be another possible operating system. This is not specifically limited in the embodiments of this application.

Optionally, an embodiment of this application further provides an electronic device, including a processor, a memory, and a program or instructions stored in the memory and runnable on the processor. The program or instructions, when being executed by the processor, implement each process in the embodiments of the foregoing RO time-domain resource configuration method, and the same technical effect can be achieved. To avoid repetition, details are described again.

It should be noted that the electronic device in embodiments of this application includes the foregoing mobile electronic device or non-mobile electronic device.

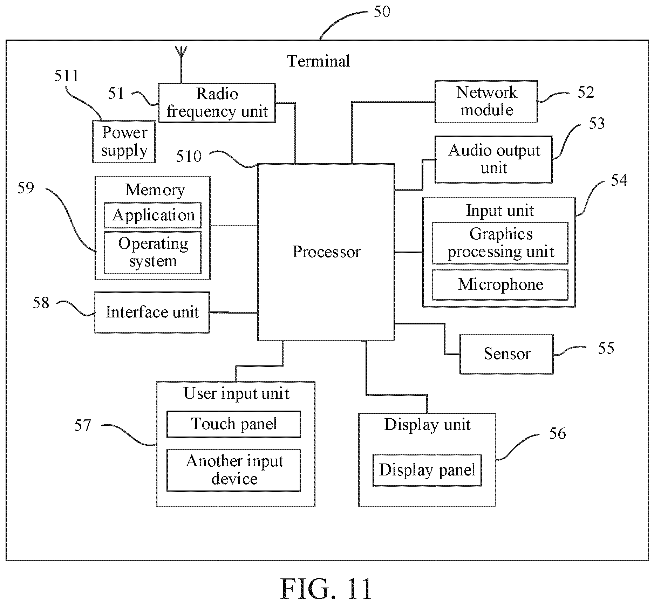

The electronic device in this embodiment may be a terminal. FIG. 11 is a schematic diagram of a hardware structure of a terminal according to the embodiments of this application. The terminal 50 includes, but is not limited to, components such as a radio frequency unit 51, a network module 52, an audio output unit 53, an input unit 54, a sensor 55, a display unit 56, a user input unit 57, an interface unit 58, a memory 59, a processor 510, and a power supply 511. A person skilled in the art may understand that the terminal structure shown in FIG. 11 does not constitute a limitation on the terminal, and the terminal may include more or fewer components than shown, or combine some components, or have different component arrangements. In the embodiments of this application, the terminal includes, but is not limited to, a mobile phone, a tablet computer, a notebook computer, a handheld computer, an in-vehicle terminal, a wearable device, a pedometer, and the like.

It should be understood that, in this embodiment of this application, the radio frequency unit 51 may be configured to send and receive a signal during an information receiving and sending process or a call process. Specifically, the radio frequency unit receives downlink data from a base station, then delivers the downlink information to the processor 510 for processing, and sends related uplink data to the base station. Generally, the radio frequency unit 51 includes, but is not limited to, an antenna, at least one amplifier, a transceiver, a coupler, a low noise amplifier, a duplexer, and the like. In addition, the radio frequency unit 51 may further communicate with the network and another device through wireless communication system.

The memory 59 may be configured to store a software program and various data. The memory 59 may mainly include a program storage area and a data storage area. The program storage area may store an operating system, an application program required by at least one function (for example, a sound playback function and an image display function), and the like. The data storage area may store data (for example, audio data and an address book) created according to the use of the mobile phone, and the like. In addition, the memory 59 may include a high-speed random access memory, and may also include a nonvolatile memory, for example, at least one magnetic disk storage device, a flash memory, or another volatile solid-state storage device.

The processor 510 is a control center of the terminal, and connects to various parts of the terminal by using various interfaces and lines. By running or executing the software program and/or module stored in the memory 59, and invoking data stored in the memory 59, the processor performs various functions and data processing of the terminal, thereby performing overall monitoring on the terminal. The processor 510 may include one or at least two processing units. Preferably, the processor 510 may integrate an application processor and a modem processor. The application processor mainly processes an operating system, a user interface, an application program, and the like. The modem processor mainly processes wireless communication. It may be understood that, the modem processor may alternatively not be integrated in the processor 510.

The terminal 50 may further include the power supply 511 (such as a battery) for supplying power to the components. Preferably, the power supply 511 may be logically connected to the processor 510 by a power management system, thereby implementing functions such as charging, discharging, and power consumption management by using the power management system.

In addition, the terminal 50 includes some functional module that are not shown, which are not described herein in detail.

The processor 510 is further configured to determine, based on a first information set and a subcarrier spacing of a reference time unit, RO time-domain resource configuration information that is in each subframe and that is used for transmitting a random access preamble.

Parameters of the first information set are obtained in at least one of the following manners:

parameters configured by first configuration signaling;
obtained by extending the parameters configured by the first configuration signaling;
parameters predefined by a protocol; and
obtained by extending the parameters predefined by the protocol.

In embodiments of this application, RO time-domain resource configuration information that is in each subframe and that is used for transmitting a random access preamble is determined based on a first information set and a subcarrier spacing of a reference time unit. In this way, existing RO time-domain resource configuration may be followed, so that a larger PRACH subcarrier spacing is supported.

In some embodiments, the subcarrier spacing of the reference time unit is only applied or configured in a specific frequency range and/or a specific PRACH subcarrier spacing.

In some embodiments, subcarrier spacings of all PRACH time units correspond to a same subcarrier spacing of a reference time unit; or

a subcarrier spacing of at least one PRACH time unit corresponds to a unique subcarrier spacing of a reference time unit; or
a subcarrier spacing of at least one PRACH time unit corresponds to a first subcarrier spacing of a reference time unit, and the first subcarrier spacing of the reference time unit is any one of subcarrier spacings of a plurality of subcarrier spacings of the reference time units.

In some embodiments, the first information set includes at least one of the following:

a time unit number of an RO based on a reference time unit;
a time unit number of a PRACH within a reference time unit; and
RO configuration information of a preset frequency range.

The preset frequency range may be a frequency range 2 or may be another frequency range, for example, a frequency range 1.

In some embodiments, the RO configuration information of the preset frequency range includes at least one of the following:

> a number of ROs within a PRACH time unit;
> a starting symbol of a first RO in time domain within each basic time unit including ROs; and
> a number of OFDM symbols occupied by an RO in time domain.

In some embodiments, the RO configuration information of the preset frequency range is predefined by a protocol or configured by signaling.

In some embodiments, the time unit number of the RO based on a reference time unit is determined by at least one of a time unit number of the RO based on a basic time unit, a number s of basic time units within a frame, and a subcarrier spacing $15 \times 2^{\mu_2}$ of a basic time unit, a value of s is predefined by a protocol or configured by signaling, and a value of $\mu_2$ is predefined by a protocol or configured by signaling. For example, the value of s is predefined by a protocol, and the value of $\mu_2$ is predefined by a protocol; or, the value of s is predefined by a protocol, and the value of $\mu_2$ is configured by signaling; or, the value of s is configured by signaling, and the value of $\mu_2$ is predefined by a protocol; or, the value of s is configured by signaling, and the value of $\mu_2$ is configured by signaling.

In some embodiments, the subcarrier spacing of the reference time unit is $15 \times 2^{\mu_1}$, the time unit number of the RO based on a reference time unit is obtained by performing periodic extension on a time unit number of the RO based on a basic time unit, a period is s, and a number of times of the periodic extension is $2^{\mu_1-\mu_2}$.

In a specific example, a sequence number of a slot in which an RO based on a basic slot is located is {0,1,...,k} (sequence numbers are not necessarily consecutive, are not necessarily sequential, and do not necessarily start from 0). The number of basic slots within a frame is s. A subcarrier spacing of a basic slot is $15 \times 2^{\mu_2}$. A rule of the sequence number of a slot in which an RO based on a basic slot is located may be followed to number a slot in which an RO based on a reference slot is located in an extended manner, to obtain that a sequence number of the slot in which an RO based on a reference slot is located is {0,1, ..., k} + s × {0,1,..., $2^{\mu_1-\mu_2}$ - 1} ($\mu_1 \geq \mu_2$).

In some embodiments, in a case that a PRACH subcarrier spacing $15 \times 2^{\mu}$ is equal to a subcarrier spacing $15 \times 2^{\mu_1}$ of a reference time unit, the time unit number of a PRACH within a reference time unit is $n_{slot}^{RA} = \{0\}$; or

otherwise the time unit number $n_{slot}^{RA}$ of a PRACH within a reference time unit is determined by at least one of a time unit number of a PRACH within a basic time unit, a maximum number M of PRACH time units within a basic time unit, $\mu$, and $\mu_1$, a value of M is predefined by a protocol or configured by signaling, and a value of $\mu$ is predefined by a protocol or configured by signaling.

In some embodiments, the time unit number $n_{slot}^{RA}$ of a PRACH within a reference time unit is obtained by performing periodic extension on the time unit number of a PRACH within a basic time unit, a period is M, and a number of times of the periodic extension is $M^{\mu-\mu_1-1}$.

In a specific example, a sequence number of a slot of a PRACH within a basic slot is {0,1,...,Q} (sequence numbers are not necessarily consecutive, are not necessarily sequential, and do not necessarily start from 0). The maximum number of PRACH slots that may be within a basic slot is M. A rule of the sequence number of a slot of a PRACH within a basic slot may be followed to number PRACH slots within a reference slot in an extended manner, to obtain a sequence number $n_{slot}^{RA}$ of a slot of a PRACH within a reference slot. If a used PRACH subcarrier spacing 15 × $2^{\mu}$ is equal to a subcarrier spacing of a reference slot, $n_{slot}^{RA} = \{0\}$; or otherwise,

$$n_{slot}^{RA} = \{0,1,\ldots,Q\} + M \times \{0,1,\ldots,M^{\mu-\mu_1-1} - 1\}$$.

In some embodiments, in a case that a subcarrier spacing of at least one PRACH time unit corresponds to a unique subcarrier spacing of a reference time unit, the subcarrier spacing of the reference time unit is used for RO time-domain resource configuration of a first part. The first part is a part with a PRACH subcarrier spacing greater than a first subcarrier spacing. The first subcarrier spacing is a maximum supported PRACH subcarrier spacing of a subcarrier spacing of a basic time unit.

In some embodiments, in a case that a subcarrier spacing of at least one PRACH time unit corresponds to a first subcarrier spacing of a reference time unit, the first subcarrier spacing of the reference time unit is used for RO time-domain resource configuration of the subcarrier spacing of the at least one PRACH time unit.

In some embodiments, the time unit is a slot.

In some embodiments, the subcarrier spacing of the reference time unit is configured by signaling or predefined by a protocol.

An embodiment of this application further provides a readable storage medium. The readable storage medium stores a program or instructions. When executed by a processor, the program or instructions implement the processes of the embodiment of the foregoing RO time-domain resource configuration method, and can achieve the same technical effects. To avoid repetition, details are not described herein again.

The processor is a processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, an optical disc or the like.

An embodiment of this application further provides a chip. The chip includes a processor and a communication interface. The communication interface is coupled to the processor are. The processor is configured to execute a program or an instruction to implement various processes in the embodiments of the RO time-domain resource configuration method, and can achieve the same technical effect. To avoid repetition, details are described again.

An embodiment of this application further provides a computer program product, where the computer program product is stored in a non-volatile storage medium. The computer program product is executed by at least one processor to implement various processes in embodiments of the foregoing RO time-domain resource configuration method, and can achieve the same technical effect. To avoid repetition, details are described again.

It should be noted that, the chip mentioned in the embodiments of this application may also be referred to as a system-level chip, a system chip, a chip system, a system on chip, or the like.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. Further, it needs to be noted that the scope of the methods and apparatuses in the embodiments of this application is not limited to performing the functions in the order shown or discussed, but may also include performing the functions in a substantially simultaneous manner or in the reverse order depending on the functions involved. For example, the described methods may be performed in a different order than described, and various steps may also be added, omitted, or combined. In addition, features described with reference to some examples may be combined in other examples.

Through the descriptions of the foregoing implementations, a person skilled in the art may clearly understand that the methods in the foregoing embodiments may be implemented through software and a necessary general hardware platform, and certainly, may be implemented by hardware, but in many cases, the former manner is a better implementation. Based on such an understanding, the technical solutions of this application essentially or the part contributing to the related art may be implemented in a form of a software product. The computer software product is stored in a storage medium (such as a ROM/RAM, a magnetic disk, or an optical disc) and includes several instructions for instructing a terminal (which may be a mobile phone, a computer, a server, a network device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

**Claims**

1. A random access occasion RO time-domain resource configuration method, performed by a terminal, and comprising:

   determining, based on a first information set and a subcarrier spacing of a reference time unit, RO time-domain resource configuration information that is in each subframe and that is used for transmitting a random access preamble, wherein
   parameters of the first information set are obtained in at least one of the following manners:

   parameters configured by first configuration signaling;
   obtained by extending the parameters configured by the first configuration signaling;
   parameters predefined by a protocol; and
   obtained by extending the parameters predefined by the protocol.

2. The RO time-domain resource configuration method according to claim 1, wherein the subcarrier spacing of the reference time unit is only applied or configured in a specific frequency range and/or a specific PRACH subcarrier spacing.

3. The RO time-domain resource configuration method according to claim 2, wherein

subcarrier spacings of all PRACH time units correspond to a same subcarrier spacing of a reference time unit; or
a subcarrier spacing of at least one PRACH time unit corresponds to a unique subcarrier spacing of a reference time unit; or
a subcarrier spacing of at least one PRACH time unit corresponds to a first subcarrier spacing of a reference time unit, and the first subcarrier spacing of the reference time unit is any one of subcarrier spacings of a plurality of subcarrier spacings of the reference time units.

4. The RO time-domain resource configuration method according to claim 1, wherein the first information set comprises at least one of the following:

a time unit number of an RO based on a reference time unit;
a time unit number of a PRACH within a reference time unit; and
RO configuration information of a preset frequency range.

5. The RO time-domain resource configuration method according to claim 4, wherein the RO configuration information of the preset frequency range comprises at least one of the following:

a number of ROs within a PRACH time unit;
a starting symbol of a first RO in time domain within each basic time unit comprising ROs; and
a number of OFDM symbols occupied by an RO in time domain.

6. The RO time-domain resource configuration method according to claim 4, wherein the RO configuration information of the preset frequency range is predefined by a protocol or configured by signaling.

7. The RO time-domain resource configuration method according to claim 4, wherein the time unit number of the RO based on a reference time unit is determined by at least one of a time unit number of the RO based on a basic time unit, a number s of basic time units within a frame, and a subcarrier spacing $15 \times 2^{\mu_2}$ of a basic time unit, a value of s is predefined by a protocol or configured by signaling, and a value of $\mu_2$ is predefined by a protocol or configured by signaling.

8. The RO time-domain resource configuration method according to claim 7, wherein the subcarrier spacing of the reference time unit is $15 \times 2^{\mu_1}$, the time unit number of the RO based on a reference time unit is obtained by performing periodic extension on a time unit number of the RO based on a basic time unit, a period is s, and a number of times of the periodic extension is $2^{\mu_1-\mu_2}$.

9. The RO time-domain resource configuration method according to claim 4, wherein
in a case that a PRACH subcarrier spacing $15 \times 2^\mu$ is equal to a subcarrier spacing $15 \times 2^{\mu_1}$ of a reference time unit, the time unit number of a PRACH within a reference time unit is $n_{slot}^{RA} = \{0\}$; or otherwise the time unit number $n_{slot}^{RA}$ of a PRACH within a reference time unit is determined by at least one of a time number of a PRACH within a basic time unit, a maximum number M of PRACH time units within a basic time unit, $\mu$, and $\mu_1$, a value of M is predefined by a protocol or configured by signaling, and a value of $\mu$ is predefined by a protocol or configured by signaling.

10. The RO time-domain resource configuration method according to claim 9, wherein
the time unit number $n_{slot}^{RA}$ of a PRACH within a reference time unit is obtained by performing periodic extension on the time unit number of a PRACH within a basic time unit, a period is M, and a number of times of the periodic extension is $M^{\mu-\mu_1-1}$.

11. The RO time-domain resource configuration method according to claim 3, wherein

in a case that a subcarrier spacing of at least one PRACH time unit corresponds to a unique subcarrier spacing of a reference time unit, the subcarrier spacing of the reference time unit is used for RO time-domain resource configuration of a first part, the first part is a part with a PRACH subcarrier spacing greater than a first subcarrier spacing, and the first subcarrier spacing is a maximum supported PRACH subcarrier spacing of a subcarrier spacing of a basic time unit.

12. The RO time-domain resource configuration method according to claim 3, wherein in a case that a subcarrier spacing of at least one PRACH time unit corresponds to a first subcarrier spacing of a reference time unit, the first subcarrier spacing of the reference time unit is used for RO time-domain resource configuration of the subcarrier spacing of the at least one PRACH time unit.

13. The RO time-domain resource configuration method according to claim 1, wherein the time unit is a slot.

14. The RO time-domain resource configuration method according to claim 1, wherein the subcarrier spacing of the reference time unit is configured by signaling or predefined by a protocol.

15. A random access occasion RO time-domain resource configuration apparatus, comprising:

   a processing module, configured to determine, based on a first information set and a subcarrier spacing of a reference time unit, RO time-domain resource configuration information that is in each subframe and that is used for transmitting a random access preamble, wherein
   parameters of the first information set are obtained in at least one of the following manners:

      parameters configured by first configuration signaling;
      obtained by extending the parameters configured by the first configuration signaling;
      parameters predefined by a protocol; and
      obtained by extending the parameters predefined by the protocol.

16. The RO time-domain resource configuration apparatus according to claim 15, wherein the subcarrier spacing of the reference time unit is only applied or configured in a specific frequency range and/or a specific PRACH subcarrier spacing.

17. The RO time-domain resource configuration apparatus according to claim 16, wherein

   subcarrier spacings of all PRACH time units correspond to a same subcarrier spacing of a reference time unit; or
   a subcarrier spacing of at least one PRACH time unit corresponds to a unique subcarrier spacing of a reference time unit; or
   a subcarrier spacing of at least one PRACH time unit corresponds to a first subcarrier spacing of a reference time unit, and the first subcarrier spacing of the reference time unit is any one of subcarrier spacings of a plurality of subcarrier spacings of the reference time units.

18. The RO time-domain resource configuration apparatus according to claim 15, wherein the first information set comprises at least one of the following:

   a time unit number of an RO based on a reference time unit;
   a time unit number of a PRACH within a reference time unit; and
   RO configuration information of a preset frequency range.

19. The RO time-domain resource configuration apparatus according to claim 18, wherein the RO configuration information of the preset frequency range comprises at least one of the following:

   a number of ROs within a PRACH time unit;
   a starting symbol of a first RO in time domain within each basic time unit comprising ROs; and
   a number of OFDM symbols occupied by an RO in time domain.

20. The RO time-domain resource configuration apparatus according to claim 18, wherein the RO configuration information of the preset frequency range is predefined by a protocol or configured by signaling.

21. The RO time-domain resource configuration apparatus according to claim 18, wherein
the time unit number of the RO based on a reference time unit is determined by at least one of a time unit number of the RO based on a basic time unit, a number s of basic time units within a frame, and a subcarrier spacing $15 \times 2^{\mu_2}$ of a basic time unit, a value of s is predefined by a protocol or configured by signaling, and a value of $\mu_2$ is predefined by a protocol or configured by signaling.

22. The RO time-domain resource configuration apparatus according to claim 21, wherein the subcarrier spacing of the reference time unit is $15 \times 2^{\mu_1}$, the time unit number of the RO based on a reference time unit is obtained by performing periodic extension on a time unit number of the RO based on a basic time unit, a period is s, and a number of times of the periodic extension is $2^{\mu_1-\mu_2}$.

23. The RO time-domain resource configuration apparatus according to claim 21, wherein
in a case that a PRACH subcarrier spacing $15 \times 2^{\mu}$ is equal to a subcarrier spacing $15 \times 2^{\mu_1}$ of a reference time unit, the time unit number of a PRACH within a reference time unit is $n_{slot}^{RA} = \{0\}$ ; or otherwise the time unit number $n_{slot}^{RA}$ of a PRACH within a reference time unit is determined by at least one of a time unit number of a PRACH within a basic time unit, a maximum number M of PRACH time units within a basic time unit, $\mu$, and $\mu_1$, a value of M is predefined by a protocol or configured by signaling, and a value of $\mu$ is predefined by a protocol or configured by signaling.

24. The RO time-domain resource configuration apparatus according to claim 23, wherein
the time unit number $n_{slot}^{RA}$ of a PRACH within a reference time unit is obtained by performing periodic extension on the time unit number of a PRACH within a basic time unit, a period is M, and a number of times of the periodic extension is $M^{\mu-\mu_1-1}$.

25. The RO time-domain resource configuration apparatus according to claim 17, wherein
in a case that a subcarrier spacing of at least one PRACH time unit corresponds to a unique subcarrier spacing of a reference time unit, the subcarrier spacing of the reference time unit is used for RO time-domain resource configuration of a first part, the first part is a part with a PRACH subcarrier spacing greater than a first subcarrier spacing, and the first subcarrier spacing is a maximum supported PRACH subcarrier spacing of a subcarrier spacing of a basic time unit.

26. The RO time-domain resource configuration apparatus according to claim 17, wherein in a case that a subcarrier spacing of at least one PRACH time unit corresponds to a first subcarrier spacing of a reference time unit, the first subcarrier spacing of the reference time unit is used for RO time-domain resource configuration of the subcarrier spacing of the at least one PRACH time unit.

27. The RO time-domain resource configuration apparatus according to claim 15, wherein the time unit is a slot.

28. The RO time-domain resource configuration apparatus according to claim 15, wherein the subcarrier spacing of the reference time unit is configured by signaling or predefined by a protocol.

29. An electronic device, comprising a processor, a memory, and a program or instructions stored in the memory and executable on the processor, wherein the program or instructions, when being executed by the processor, implement the steps of the method according to any one of claims 1 to 14.

30. A readable storage medium is provided, the readable storage medium storing a program or instructions, wherein the program or instructions, when being executed by a processor, implement the steps of the method according to any one of claims 1 to 14.

31. A chip, comprising a processor and a communication interface, wherein the communication interface is coupled to the processor, and the processor is configured to execute a program or instructions, to implement the steps of the method according to any one of claims 1 to 14.

32. A computer program product, wherein the computer program product is stored in a non-transient storage medium, wherein the computer program product is executed by at least one processor to implement the steps of the method according to any one of claims 1 to 14.

FIG. 1

FIG. 2

Determine, based on a first information set and a
subcarrier spacing of a reference time unit, RO time-
domain resource allocation information that is in
each subframe and that is used for transmitting a
random access preamble

101

FIG. 3

FIG. 4

FIG. 5

FIG. 6

FIG. 7

FIG. 8

FIG. 9

FIG. 10

FIG. 11

## INTERNATIONAL SEARCH REPORT

| International application No. |
| --- |
| **PCT/CN2021/135635** |

**A.  CLASSIFICATION OF SUBJECT MATTER**

H04L 5/00(2006.01)i

According to International Patent Classification (IPC) or to both national classification and IPC

**B.  FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 随机接入时机, 时域, 资源配置, 子载波间隔, 参考时间单元, 参考时隙, 时隙号, RO, SCS, PRACH, slot, number, reference, FR1, FR2, subcarrier spacing, preamble, random access, reuse, configuration

**C.  DOCUMENTS CONSIDERED TO BE RELEVANT**

| Category* | Citation of document, with indication, where appropriate, of the relevant passages | Relevant to claim No. |
| --- | --- | --- |
| PX | ERICSSON. "Initial Access Aspects" <br> *3GPP TSG-RAN WG1 Meeting #104bis-e R1-2102788*, 07 April 2021 (2021-04-07), section 2 | 1-32 |
| X | CN 110419259 A (SAMSUNG ELECTRONICS CO., LTD.) 05 November 2019 (2019-11-05) description paragraphs [0010]-[0250] | 1-32 |
| A | CN 111919411 A (SAMSUNG ELECTRONICS CO., LTD.) 10 November 2020 (2020-11-10) entire document | 1-32 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 February 2022** | **21 February 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/135635**

| Patent document cited in search report | | | Publication date (day/month/year) | Patent family member(s) | | | Publication date (day/month/year) |
|---|---|---|---|---|---|---|---|
| CN | 110419259 | A | 05 November 2019 | EP | 3571889 | A1 | 27 November 2019 |
| | | | | EP | 3571889 | A4 | 15 January 2020 |
| | | | | WO | 2018212618 | A1 | 22 November 2018 |
| | | | | US | 2018338308 | A1 | 22 November 2018 |
| | | | | US | 11147063 | B2 | 12 October 2021 |
| | | | | KR | 20180126862 | A | 28 November 2018 |
| | | | | US | 2021410138 | A1 | 30 December 2021 |
| CN | 111919411 | A | 10 November 2020 | KR | 20200128075 | A | 11 November 2020 |
| | | | | WO | 2019190251 | A1 | 03 October 2019 |
| | | | | EP | 3732812 | A1 | 04 November 2020 |
| | | | | EP | 3732812 | A4 | 21 July 2021 |
| | | | | US | 2019306832 | A1 | 03 October 2019 |
| | | | | US | 11160050 | B2 | 26 October 2021 |

Form PCT/ISA/210 (patent family annex) (January 2015)

**REFERENCES CITED IN THE DESCRIPTION**

**Patent documents cited in the description**

- CN 202011435933